# EUROPÄISCHE PATENTSCHRIFT

(11) **EP 3 569 395 B1**
(45) Veröffentlichungstag und Bekanntmachung des Hinweises auf die Patenterteilung: **13.04.2022**
(21) Anmeldenummer: 19169165.8
(22) Anmeldetag: 15.04.2019
(51) Int. Cl.: B29D 30/06

(54) **VERFAHREN ZUM VULKANISIEREN EINES REIFENS**
METHOD FOR VULCANIZING A TYRE
PROCÉDÉ DE VULCANISATION D'UN PNEU

(30) Priorität: 17.05.2018 DE 102018207746
(43) Veröffentlichungstag der Anmeldung: 20.11.2019
(73) Patentinhaber: Continental Reifen Deutschland GmbH, 30165 Hannover (DE)
(72) Erfinder: Walczok, Mario, 30165 Hannover (DE); Hesse, Heiko, 30165 Hannover (DE)
(74) Vertreter: Continental Corporation

(56) Entgegenhaltungen:
- EP-A1- 0 468 345
- EP-A1- 3 308 923
- DE-A1- 2 059 583
- GB-A- 553 079
- JP-A- 2007 190 808
- US-A- 2 314 726
- US-A- 5 441 393

## Beschreibung

Die Erfindung betrifft ein Verfahren zum Vulkanisieren eines Reifens, insbesondere Fahrzeugreifen, gemäß dem Oberbegriff des Anspruchs 1.

Zur Herstellung eines Reifens, insbesondere Fahrzeugreifens, wird ein Reifenrohling in einem Haupt-Vulkanisierungsprozess zunächst in einem Vulkanisierungsraum einer Vulkanisierungsvorrichtung unter Druck erhitzt. Dazu wird der Reifenrohling von innen mittels eines Heizbalges, in dem ein unter Druck stehendes, erhitztes Heizmedium eingelassen wird, erhitzt und in seine Form gebracht. Von außen wird der Reifenrohling in dem Vulkanisierungsraum mittels Profilsegmente, Seitenwandschalen und Wulstringen, erwärmt, wobei diese außenseitigen Heizelemente beispielsweise über Heizkammern bzw. Heizplatten gleich oder individuell erhitzt werden können.

Nach dem Haupt-Vulkanisationsprozess in dem Vulkanisierungsraum wird der Reifen aus dem Vulkanisierungsraum entnommen und hinter der Heizpresse in einem Abkühlbereich abgelegt und sodann unter Umgebungstemperatur abgekühlt oder gezielt nachvulkanisiert, um eine Nachvernetzung zu erreichen. Für eine Nachvulkanisierung kann gemäß DE 10 2009 003 447 A1 beispielsweise vorgesehen sein, den Reifen in einen thermisch verschlossenen Behälter zu bringen und den Reifen in dem Behälter durch eine Luftumwälzung mit Ventiltoren und einem Temperierelement gezielt abzukühlen. Das Temperierelement wirkt hierbei berührungslos auf den Reifen, wobei beispielsweise über Heizdampf oder über Heißwasser oder über ein elektrisches Heizelement im Temperierelement dafür gesorgt wird, dass in dem Behälter eine gezielte Umgebungstemperatur eingestellt wird, die zu einem kontrollierten Abkühlen des Reifens führt. Dadurch kann eine Nachvernetzung der Gummimischung des gesamten Reifens nach dem Haupt-Vulkanisierungsprozess in gewissen Grenzen eingestellt werden, um beispielsweise bestimmte Reifeneigenschaften zu erhalten.

Nachteilig bei bekannten Verfahren ist, dass die Abkühlung des vulkanisierten Reifens in der Umgebung bzw. in dem temperierten Behälter über den gesamten Reifen gleichmäßig erfolgt. Dies hat zur Folge, dass bei einem bestimmten Abkühlungsverhalten des vulkanisierten Reifens die Nachvernetzung der Gummimischungen in einzelnen Reifenzonen zu einer Verbesserung der Reifeneigenschaften führt, während in anderen Reifenzonen eine Verschlechterung der Reifeneigenschaften auftreten kann. Beispielsweise kann der Rollwiderstand bei einer geringen Vulkanisierungstemperatur und damit einem geringen Vernetzungsgrad der Lauffläche reduziert werden, während gleichzeitig aber das Nassbremsen über die Lauffläche verschlechtert wird. Auf der anderen Seite ist ein höherer Vernetzungsgrad auf der Lauffläche besser für den Nassgriff, jedoch gleichzeitig schlechter für den Rollwiderstand.

Dem kann durch individuell einstellbare Temperaturen zwischen den Profilsegmenten und den Heizplatten der Seitwandschalen und Wulstringe nur bedingt entgegengewirkt werden, da sich dadurch nur geringe Temperaturunterschiede und somit Unterschiede im Vernetzungsgrad zwischen der Reifenlauffläche und den Seitenwand-/Wulstbereichen darstellen lassen. Zudem können die Heizzeiten nicht individuell eingestellt werden, da die Heizzeiten durch die Verweildauer in dem Vulkanisierungsraum bestimmt sind. Somit können dahingehend nur geringe Verbesserungen erreicht werden, da die Vernetzungsgrade in unterschiedlichen Reifenzonen nur bedingt beeinflusst werden können.

Ein weiteres Verfahren zum Vulkanisieren von Reifen ist in JP 2007 190808 A beschrieben.

Aufgabe der Erfindung ist daher, ein Verfahren zum Vulkanisieren von Reifen anzugeben, mit dem Reifen mit hoher Produktqualität und optimierten Reifeneigenschaften hergestellt werden können.

Diese Aufgabe wird durch ein Verfahren nach Anspruch 1 gelöst. Die Unteransprüche geben bevorzugte Weiterbildungen an.

Erfindungsgemäß ist demnach vorgesehen, nach dem Durchführen eines Haupt-Vulkanisierungsprozesses in einem Vulkanisierungsraum, in dem der Reifen mit Druck und Wärme behandelt wird und in dem der Reifen in seine endgültige Form gebracht wird und eine bestimmte Vernetzung des Materials des Reifens stattfindet, einen zusätzlichen Temperierprozess durchzuführen, in dem ein Temperierelement zumindest bereichsweise an den Reifen angelegt wird, um thermisch auf den Reifen einzuwirken, so dass eine Temperatur des Reifens bereichsweise gezielt durch das Temperierelement beeinflusst wird zum gezielten Nachvernetzen des Reifens.

Vorteilhafterweise wird dadurch erreicht, dass einzelne Reifenzonen des Reifens gezielt temperiert werden können, um gewissen Reifeneigenschaften genau anpassen zu können. Unter gezielt wird hierbei verstanden, dass ein gezielt einstellbarer Energieübertrag vom Temperierelement in den Reifen oder umgedreht erfolgen kann, so dass die Nachvernetzung genau beeinflusst werden kann. Dazu kann sowohl die geometrische als auch die zeitliche Ausdehnung der Wärmebehandlung bzw. der thermischen Einwirkung beeinflusst werden.

Dadurch, dass das Temperierelement direkt am Reifen anliegt, kann zudem ein sehr schneller Energieübertrag bzw. eine schnelle Änderung des Energieübertrags bewirkt werden. Wird beispielsweise die Temperatur des Temperierelementes verändert, so wirkt sich dies auch unmittelbar auf die Temperatur des Reifens aus. Gleichzeitig wird bei einem Abkühlen des Reifens die Wärmeenergie des Reifens direkt vom Temperierelement aufgenommen, so dass die Umgebungsluft keinen großen Einfluss auf die Temperierung des Reifens hat. Dadurch ist keine thermisch abgeschirmte Umgebung nötig und der Temperierprozess kann sehr genau gesteuert werden, so dass der Vernetzungsgrad sehr genau eingestellt werden kann.

Vorzugsweise ist vorgesehen, dass das Temperierelement an eine Lauffläche des Reifens angelegt wird zum gezielten Nachvernetzen der Lauffläche. Dadurch können u.a. die Abriebeigenschaften des Reifens und/oder die Bremseigenschaften des Reifens und/oder der Rollwiderstand und/oder die Fahreigenschaften gezielt eingestellt werden, da diese vom Vernetzungsgrad abhängig sind. Durch die gezielte Einstellung des Vernetzungsgrades können einzelne Reifeneigenschaften ggf. auch anwendungsbezogen genau eingestellt werden.

Die Beeinflussung der Temperatur bezieht sich hierbei auf unterschiedliche Bereiche bzw. Reifenzonen, wobei diese bereichsweise thermische Beeinflussung in radialer Richtung bzw. schichtweise und auch in axialer Richtung unterschiedlich erfolgen kann. Eine radial unterschiedliche thermische Beeinflussung kann beispielsweise dadurch erfolgen, dass der Zeitraum der Temperierung sehr kurz eingestellt wird, so dass sich obere Schichten des Reifens, insbesondere eine Lauffläche, stärker aufheizen als untere Schichten, die näher zum Reifeninnenraum liegen. Dadurch kann der Vernetzungsgrad der außen liegenden Lauffläche derartig eingestellt werden, dass ein gutes Nassbremsen mit dem Reifen erreicht werden kann. Gleichzeitig wird durch den kurzen Zeitraum der Temperierung der Vernetzungsgrad der tiefer liegenden Schichten geringer eingestellt, was wiederum einen positiven Einfluss auf den Rollwiderstand hat. Durch die schichtweise unterschiedliche thermische Beeinflussung können beide Eigenschaften optimiert werden, ohne dass eine gegenseitige Beeinflussung erfolgt.

Erfindungsgemäß ist weiterhin vorgesehen, dass das Temperierelement mit mehreren Temperiersegmenten auf den Reifen thermisch einwirkt und benachbarte Temperiersegmente die Temperatur des Reifens unterschiedlich stark beeinflussen. Dadurch kann die unterschiedliche thermische Beeinflussung in axialer Richtung umgesetzt werden. Dadurch können Laufflächen, die unterschiedliche Gummimischungen aufweisen, dennoch mit einem homogenen Vernetzungsgrad über die Breite der Lauffläche hergestellt werden. Die Temperatur und der Zeitraum werden dazu derartig angepasst, dass für jede Gummimischung in etwa derselbe Vernetzungsgrad resultiert. Somit können durch die mehreren Temperiersegmente vorteilhafterweise auch unterschiedliche Zeiträume und Temperaturen für unterschiedliche Reifenzonen gezielt eingestellt werden.

Gemäß einer bevorzugten Ausführungsform ist vorgesehen, dass das Temperierelement umlaufend an den Reifen angelegt wird. Dadurch wird ebenfalls ein homogener Vernetzungsgrad über den gesamten Reifen erreicht und insbesondere bei einer thermischen Behandlung der Lauffläche auch die Abriebeigenschaften bzw. Bremseigenschaften über den gesamten Reifenumfang optimiert.

Gemäß einer bevorzugten Ausbildung ist vorgesehen, dass mit dem Temperierelement ein vorgegebener Temperaturverlauf des Reifens über einen bestimmten Zeitraum eingestellt wird. Dadurch kann der Vernetzungsgrad vorteilhafterweise noch gezielter eingestellt werden, da nicht nur die Temperatur gezielt eingestellt wird, sondern auch der Gradient, so dass beispielsweise kein zu schnelles Abkühlen oder Aufheizen des Reifens stattfindet. Dadurch dass das Temperierelement am Reifen anliegt, kann zudem gewährleistet werden, dass die Temperatur im Reifen dem Gradienten bzw. dem Temperaturverlauf zumindest im Wesentlichen folgt, ohne dass die Umgebungstemperatur dabei einen maßgeblichen Einfluss auf die Nachvernetzung hat.

Gemäß einer bevorzugten Weiterbildung ist vorgesehen, dass das Temperierelement aktiv beheizt oder abgekühlt oder in seiner Temperatur gehalten wird zum gezielten Beeinflussen der Temperatur des Reifens. Dadurch kann vorteilhafterweise erreicht werden, dass eine gezielt festgelegte Temperatur erreicht wird, wobei nicht nur ein Abkühlen des Reifens erreicht werden kann, sondern ergänzend auch ein Halten oder ein Anheben der Temperatur im Temperierprozess.

Dies kann gemäß einer bevorzugten Ausführungsform dadurch erreicht werden, dass das Temperierelement elektrisch über z.B. Heizelemente und/oder mit einem gasförmigen und/oder mit einem flüssigen Medium z.B. über Durchflusskanäle im Temperierelement temperiert wird. Gasförmige oder flüssige Medien stehen bei einem herkömmlichen Vulkanisierungsprozess ohnehin bereits zur Verfügung, so dass der Aufwand der Bereitstellung minimal ist und die Prozessvariablen bekannt sind. Eine elektrische Temperierung hat den Vorteil, dass die Temperatur und somit der Temperierprozess sehr genau gesteuert werden kann.

Gemäß einer bevorzugten Ausführungsform ist vorgesehen, dass das Temperierelement passiv wirkt und beim Anlegen an den Reifen ein Energieübertrag von dem Reifen auf das Temperierelement stattfindet zum gezielten Abkühlen des Reifens. Demnach wird durch eine entsprechende Materialwahl erreicht, dass der nach dem Haupt-Vulkanisierungsprozess aufgeheizte Reifen nicht durch die Umgebungsluft abgekühlt wird, sondern gezielt und in einzelnen Bereichen in Abhängigkeit des verwendeten Materials des direkt anliegenden Temperierelementes.

Wird beispielsweise ein thermisch gering leitfähiges Material verwendet, beispielsweise Kunststoff, kann die Wärme im Reifen länger gehalten bzw. der Reifen im jeweiligen Bereich langsamer abgekühlt werden. Dadurch kann der Vernetzungsgrad gezielt eingestellt werden. Die Materialien benachbarter Temperiersegmente können beispielsweise derartig angepasst werden, dass bereichsweise unterschiedliche Abkühlverhalten und damit unterschiedliche Vernetzungsgrade oder bei unterschiedlichen Reifenmaterialien homogene Vernetzungsgrade über die Reifenbreite eingestellt werden können.

Gemäß einer weiteren bevorzugten Ausführungsform ist vorgesehen, dass der Temperierprozess mit dem Temperierelement gleichzeitig mit dem Entladen des Reifen aus dem Vulkanisierungsraum nach dem Haupt-Vulkanisierungsprozess stattfindet, wobei das Temperierelement dazu an einem Entlader der Vulkanisierungsvorrichtung angeordnet ist und dabei vorzugsweise gleichzeitig für das Umgreifen des Reifens verwendet wird.

Dadurch kann vorteilhafterweise erreicht werden, dass der Entlade- und der Temperierprozess gleichzeitig stattfindet, so dass eine Zeitersparnis folgt. Zudem verändert sich der vulkanisierte Reifen nach dem Haupt-Vulkanisierungsprozess in seiner Vernetzung nur wenig, da die Umgebungstemperatur durch das Umgreifen durch das Temperierelement nur wenig Einfluss auf die Temperatur des Reifens hat. Der Reifen wird also in gewissem Maße thermisch isoliert.

Alternativ kann der Temperierprozess mit dem Temperierelement erst nach dem Entladen des Reifen aus dem Vulkanisierungsraum stattfinden, wobei das Temperierelmenent dazu an dem Entlader oder in einem Abkühlbereich hinter der Heizpresse angeordnet ist. Vorzugsweise findet die Temperaturbehandlung also erst in dem Abkühlbereich oder einem sgn. post-curing Bereich statt, in dem die Nachvulkanisierung überwacht werden kann. Bei einer herkömmlichen Entladung über beispielsweise Greifer, die den Reifen durch eine Öffnung für die Aufnahme der Felge aufgreifen, ist keine Umrüstung des Entladers nötig. Der Reifen wird dann erst im Abkühlbereich von einem separaten Temperierelement aufgenommen und der Temperierprozess erst dann durchgeführt. Dadurch kann der Entladeprozess vereinfacht werden und beim Entladen können keine ungewollten Störungen des Temperierprozesses durch das Entladen selbst auftreten.

Gemäß einer nicht beanspruchten Lösung ist somit ein Temperierelement zur Verwendung in einem Verfahren nach einem der vorherigen Ansprüche vorgesehen, wobei das Temperierelement zumindest bereichsweise derartig an einen Reifen, vorzugsweise die Lauffläche, anlegbar ist, dass eine Temperatur des Reifens bereichsweise gezielt durch das Temperierelement beeinflusst werden kann, um eine Nachvernetzung des Reifens einzustellen. Dafür ist das Temperierelement wie beschrieben aktiv und/oder passiv temperierbar. Weiterhin kann vorgesehen sein, das Temperierelement in Temperiersegmente zu unterteilen, wobei benachbarte Temperiersegmente unterschiedlich temperiert werden können.

Gemäß einer bevorzugten Weiterbildung ist vorgesehen, dass das Temperierelement flexibel ist, insbesondere aus einem flexiblen Material gefertigt ist und/oder Bimetalle und/oder aus- und einklappbare Bereiche aufweist zum Anpassen des Temperierelementes an unterschiedliche Reifengeometrien. Dadurch kann vorteilhafterweise erreicht werden, dass die Vulkanisierungsvorrichtung nicht umzurüsten ist, wenn in einer Fertigung eine Umstellung von einer Reifenart bzw. Reifengeometrie auf eine andere Reifenart gewünscht ist. Das Temperierelement passt sich dann durch seine Flexibilität automatisch an die neue Reifengeometrie an.

In einer nicht beanspruchten Vulkanisierungsvorrichtung zur Durchführung des beschriebenen Vulkanisierungsverfahrens (Haupt-Vulkanisierprozess und anschließender Temperierprozess) mit einem beschriebenen Temperierelement ist vorgesehen, dass das Temperierelement Teil eines Entladers ist und/oder in einem Abkühlbereich angeordnet ist. Dadurch kann der Temperierungsprozess je nach Auslegung und Verwendung der Anlage an unterschiedlichen Positionen durchgeführt werden.

Im Folgenden wird die Erfindung anhand von Ausführungsbeispielen näher erläutert. Es zeigen:
- Fig. 1: einen Vulkanisierungsraum zur Durchführung eines Haupt-Vulkanisierungsprozesses;
- Fig. 2: der Vulkanisierungsraum gemäß Fig. 1 vor dem Entladen des Reifens mit einem Entlader mit einem Temperierungselement; und
- Fig. 3: ein kombinierter Entlade- und Temperierprozess des Reifens nach dem Haupt-Vulkanisierungsprozess.

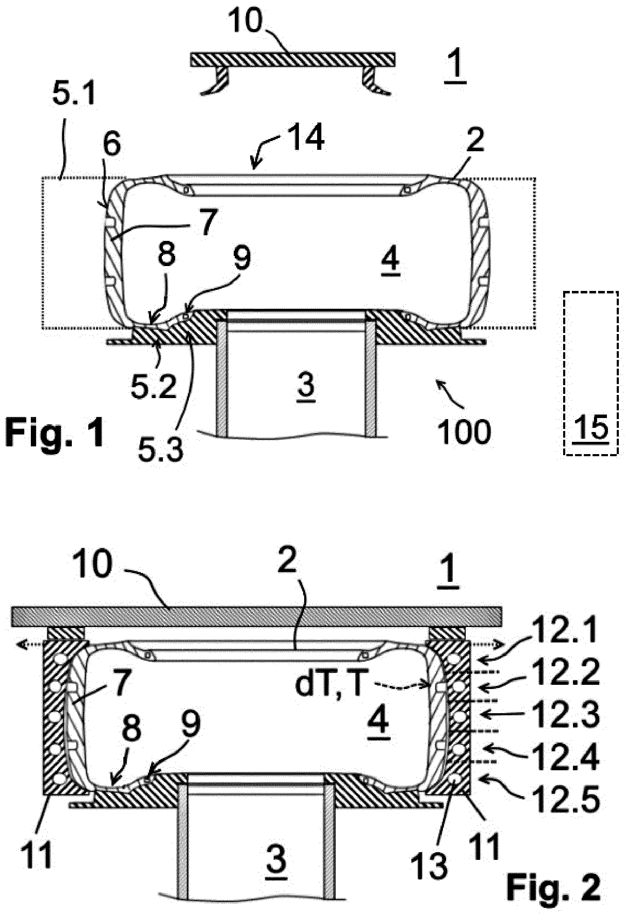

Gemäß Figur 1 ist ein Vulkanisierungsraum 1 als Teil einer Vulkanisierungsvorrichtung 100 vorgesehen, in dem ein eingebrachter Reifen 2 einem Haupt-Vulkanisierungsprozess unterzogen werden kann. Dazu wird über eine Zuleitung 3 ein gasförmiges und/oder flüssiges Heizmedium unter einem bestimmten Druck in einen Heizbalg (nicht dargestellt), der sich in einem Reifeninnenraum 4 des Reifens 2 befindet, eingelassen, so dass der Heizbalg von innen gegen den Reifen 2 drückt. Dadurch wird das erhitzte Material des Reifens 2 durch einen Druck von innen in seine Form gebracht.

Mit einer Außenseite 6 gelangt der Reifen 2 im Bereich des Laufstreifens 7 beim Haupt-Vulkanisierungsprozess gleichzeitig gegen mehrere über den Reifenumfang angeordnete beheizte Profilsegmente 5.1. Weiterhin sind Seitenwandschalen 5.2 vorgesehen, die Seitenwände 8 des Reifens 2 beheizen können. Weiterhin sind Wulstringe 5.3 vorgesehen, die den Reifen 2 im Bereich der Reifenwulst 9 beheizen können.

Somit kann in dem Haupt-Vulkanisierungsprozess erreicht werden, dass der Reifen 2 über unterschiedliche Heizelemente 5.i in unterschiedlichen Zonen 7, 8, 9 beheizt werden kann. Dadurch kann im Haupt-Vulkanisierungsprozess eine bestimmte Vernetzung der jeweiligen Bereiche 7, 8, 9 des Reifens 2 eingestellt werden, wobei der Vernetzungsgrad dieser Vernetzung abhängig von der Temperatur T und der Art des beheizten Materials des Reifens 2 ist.

Um die Vernetzung in den einzelnen Reifenzonen 7, 8, 9 variabel einstellen und somit die Reifeneigenschaften des fertiggestellten Reifens anpassen zu können, ist im erfindungsgemäßen Verfahren vorgesehen, nach dem Haupt-Vulkanisierungsprozess in einem Nach-Vulkanisierungsprozess bzw. in einem Temperierungsprozess eine gezielte Temperierung einzelner Reifenzonen bzw. Reifenbereiche vorzunehmen. Der Temperierungsprozess findet hierbei am bereits vulkanisierten Reifen 2 statt, das heißt an einem Reifen 2, dessen Form durch den Haupt-Vulkanisierungsprozess im Wesentlichen bereits festgelegt ist und der eine bestimmte Vernetzung aufweist. Unter vulkanisierter Reifen 2 wird im Folgenden der im Haupt-Vulkanisierungsprozess behandelte Reifen 2 verstanden.

Der dem Haupt-Vulkanisierungsprozess folgende Temperierungsprozess dient einer Anpassung der Vernetzung (Nachvernetzung) der einzelnen Reifenzonen 7, 8, 9 bzw. einzelner Bereiche des Reifens 2. Um dies zu erreichen, ist in den folgend beschriebenen Ausführungsformen jeweils vorgesehen, den vulkanisierten Reifen 2 aus dem Vulkanisierungsraum 1 über einen Entlader 10 zu entladen:
Gemäß einer ersten Ausführungsform, die in Fig. 2 dargestellt ist, ist vorgesehen, dass der Entlader 10 ein Temperierelement 11 aufweist. Das Temperierelement 11 ist ausgebildet, den Reifen 2 vollumfänglich im Bereich der Lauffläche 7 zu umschließen, wobei das Temperierelement 11 dazu in mehrere Teile unterteilt ist, die jeweils in radialer Richtung bezüglich des Reifens 2 verstellt werden können. Beispielsweise kann ein zwei-, drei oder vierteiliges Temperierelement 11 vorgesehen sein, wobei jeder Teil die Hälfte bzw. ein Drittel bzw. ein Viertel des gesamten Umfangs einnimmt. Die einzelnen Teile des Temperierelementes 11 können unabhängig voneinander verstellt werden, so dass diese bei entsprechend radialer Verstellung von außen gegen die Lauffläche 7 des Reifens 2 gelangen und den Reifen 2 dadurch sicher umschließen bzw. aufnehmen und diesen aus dem Vulkanisierungsraum 1 entladen können. Der Reifen 2 wird somit in dieser Ausführungsform von außen durch das mehrteilige Temperierelement 11 gegriffen und entladen. Zur Verstellung des mehrteiligen Temperierelementes 11 kann dieses in entsprechender Weise über ein Gestell (nicht dargestellt) an dem Entlader 10 befestigt sein.

Die Funktion des Entladers 10 wird durch das Vorsehen des Temperierelementes 11 derartig erweitert, dass mit dem Entlader 10 gleichzeitig ein Temperierprozess bzw. ein Nach-Vulkanisierungsprozess durchgeführt werden kann. Dazu steht das Temperierelement 11 in thermischem Kontakt zum Reifen 2, insbesondere der Lauffläche 7 des Reifens 2, so dass die Temperatur T des Reifens 2 bzw. der Lauffläche 7 gezielt angepasst bzw. beeinflusst werden kann. Das Temperierelement 11 weist dabei mehrere Temperiersegmente 12.i auf, die in axialer Richtung bezüglich des Reifens 2 aneinander angrenzen und unabhängig voneinander auf die Temperatur T des Reifens 2 einwirken können. Dazu sind die einzelnen Temperiersegmente 12.i derartig ausgeführt, dass sie die Temperatur in ihrer Umgebung aktiv und/oder passiv anpassen bzw. beeinflussen können. Dadurch kann der vom Temperierelement 11 umgriffene und an den einzelnen Temperiersegmenten 12.i anliegende Reifen 2 segmentweise auf eine entsprechende Temperatur T gebracht und somit gezielt temperiert werden. Unter temperiert wird hierbei im Rahmen der Erfindung verstanden, dass der an den Temperiersegmenten 12.i anliegende Reifen 2 sowohl abgekühlt als auch beheizt oder auch auf der aktuellen Temperatur T gehalten werden kann, um damit eine Nachvernetzung des Reifens 2 gezielt einzustellen.

Gemäß der Ausführungsform in Fig. 2 ist das Temperierelement 11 mit seinen Temperiersegmenten 12.i lediglich im Bereich des Laufstreifens 7 angeordnet. Grundsätzlich ist es jedoch auch möglich, dass das Temperierelement 11 auch in den Bereich der Seitenwand 8 bzw. der Reifenwulst 9 ausgedehnt ist, um auch diese Bereiche gezielt temperieren bzw. nachvernetzen zu können.

Um eine passive Temperierung zu erreichen, kann das Temperierelement 11 in den einzelnen Temperiersegmenten 12.i beispielsweise aus einem thermisch isolierenden Material, wie zum Beispiel einem Kunststoff mit geringer Wärmeleitfähigkeit, bestehen. Dadurch wird es möglich, die im Reifen 2 in der jeweiligen Reifenzone vorherrschende Temperatur T nach dem Haupt-Vulkanisierungsprozess zu halten bzw. je nach Materialbeschaffenheit der Temperiersegmente 12.i ein langsames Abkühlen des Reifens 2 im Temperierprozess zu ermöglichen. Durch entsprechende Wahl des Kunststoffes in den unterschiedlichen Temperiersegmenten 12.i kann der Reifen 2 in unterschiedlichen Reifenzonen z.B. des Laufstreifens 7 auch unterschiedlich schnell bzw. langsam abgekühlt werden. Dadurch kann die Nachvernetzung des bereits im Haupt-Vulkanisierungsprozess vernetzten Reifens 2 gezielt eingestellt werden, wobei die Einstellung in unterschiedlichen Reifenzonen des Laufstreifens 7 variieren kann.

Ist eine aktive Temperierung vorgesehen, kann sowohl ein Abkühlen als auch ein Aufheizen des Reifens 2 in den jeweiligen Reifenzonen erreicht werden. Dazu können die Temperiersegmente 12.i des Temperierelementes 11 auf unterschiedliche Art und Weisen aktiv ihre Temperatur verändern. Beispielsweise kann eine vorzugsweise elektrische Temperierung vorgesehen sein, bei der durch gezieltes Einstellen eines Stromflusses durch ein in dem jeweiligen Temperiersegment 12.i angeordnetes Heizelement ein Aufheizen bzw. Abkühlen des jeweiligen Temperiersegmentes 12.i erreicht werden kann. Dieses resultiert dann in einer entsprechenden Temperierung des benachbarten Reifens 2 in den entsprechenden Reifenzonen des Laufstreifens 7.

Weiterhin kann das Temperierelement 11 alternativ oder ergänzend in den einzelnen Temperiersegmenten 12.i jeweils einen Durchflusskanal 13, beispielsweise eine Bohrung, aufweisen, in die gezielt ein gasförmiges oder flüssiges Medium eingeleitet werden kann. Das jeweilige Medium kann vorher auf eine bestimmte Temperatur gebracht werden, um das Temperiersegment 12.i auf eine entsprechende Temperatur zu bringen. Dazu kann beispielsweise Dampf oder Wasser einer bestimmten Temperatur durch die Durchflusskanäle 13 strömen. Dieses bewirkt dann eine entsprechende Temperierung des Reifens 2.

Sowohl die elektrisch temperierten als auch die mit einem Medium temperierten Temperiersegmente 12.i sind hierbei umlaufend um den gesamten Reifen 2 angeordnet, um eine möglichst homogene umlaufende Temperierung des Laufstreifens 7 des Reifens 2 zu gewährleisten. Um dies zu unterstützen, ist bei der aktiven Temperierung vorgesehen, dass als Material der Temperiersegmente 12.i ein vorzugsweise gut thermisch leitendes Material gewählt wird, um die elektrisch oder über das jeweilige Medium in den Temperiersegmenten 12.i eingestellte Temperatur gut in die einzelnen Reifenzonen des Laufstreifens 7 des Reifens 2 übertragen zu können. Dadurch kann eine gezielte Temperierung vorgenommen werden, da der Temperaturunterschied zwischen den Temperierelementen 12.i und dem benachbarten Reifen 2 nur geringfügig variiert.

Im aktiven Temperierungsprozess kann aber auch vorgesehen sein, den Wärmefluss der Temperiersegmente 12.i gezielt durch entsprechende Wahl des Materials anzupassen und somit auch den Energieübertrag in den Reifen 2 gezielt einzustellen. Dazu kann vorgesehen sein, dass die einzelnen Temperiersegmente 12.i beispielsweise aus Gummi, Kunststoff, Metall, Verbundmaterialien, o.ä. bestehen. Dadurch kann gezielt beeinflusst werden, wie schnell oder langsam die einzelnen Reifenzonen des Reifens 2 durch die Temperierung abgekühlt bzw. aufgeheizt werden. Auch die Geometrie bzw. die Ausdehnung und die Materialbeschaffenheit, zum Beispiel Vollmaterial, poröses Material, Komposit, usw., können gezielt beeinflusst werden, um die Nachvernetzung des Reifens 2 in der entsprechenden Reifenzone gezielt einzustellen.

Mit einem derartigen aktiv betriebenen Temperierelement 11 kann nicht nur gezielt die Temperatur T des Reifens 2 in dem Temperierungsprozess eingestellt werden. Vielmehr kann auch ein Temperaturverlauf dT beeinflusst werden, das heißt wie schnell bzw. langsam der Reifen 2 aufgeheizt bzw. abgekühlt bzw. zeitlich in seiner Temperatur T geändert wird. Dadurch kann die Nachvernetzung des Reifens 2 noch gezielter gesteuert werden.

Gemäß einer bevorzugten Ausführungsform sind die Temperiersegmente 12.i bzw. das Temperierelement 11 im Wesentlichen aus einem flexiblen Material gefertigt, um eine Anpassung an unterschiedliche Reifenkonturen bzw. Reifengeometrien zu ermöglichen. Dies kann z.B. dadurch erreicht werden, dass mehrere Materialien für das Temperierelement 11 zum Einsatz kommen und/oder das Temperierelement 11 in einzelnen Bereichen des Umfangs unterstützend mit Bimetallen und/oder aus- und einklappbaren Bereichen versehen ist, die eine radialer und/oder axiale (Aus)Dehnbarkeit zu gewährleisten. Dadurch kann erreicht werden, dass die Vulkanisierungsanlage auf unterschiedliche Reifentypen ausgelegt werden kann, ohne dass dabei eine aufwändige Umrüstung zu erfolgen hat.

Eine Temperierzeit, die der Reifen 2 im Entlader 10 über das Temperierelement 11 temperiert wird, kann gezielt eingestellt werden, wobei der Temperierprozess aufgrund der individuellen Anpassung der Temperatur in den einzelnen Temperiersegmenten 12.i in unterschiedlichen Reifenzonen auch unterschiedlich lang stattfinden kann. Aufgrund der Möglichkeit der individuellen Temperatureinstellung können auch größere Temperaturunterschiede zwischen den einzelnen Reifenzonen bzw. Temperiersegmenten 12.i eingestellt werden, sodass im Gegensatz zum Haupt-Vulkanisierungsprozess auch Unterschiede im Vernetzungsgrad in den einzelnen Reifenzonen erzielt werden können.

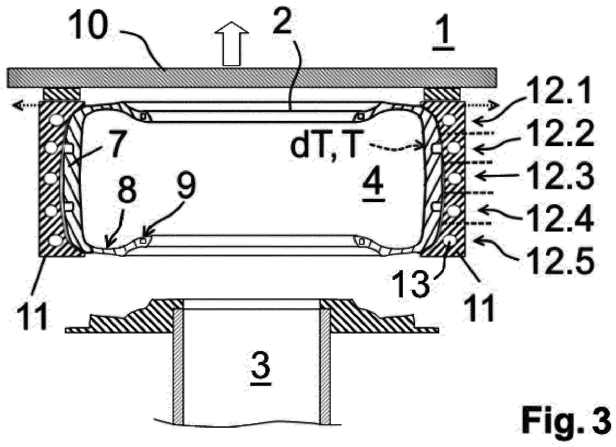

Der Temperierprozess findet in dieser Ausführungsform bereits beim Entladen des Reifens 2 aus dem Vulkanisierungsraum 1 statt, wobei dieser Zustand in Fig. 3 dargestellt ist. Ist eine passive Temperierung vorgesehen, sorgt das entsprechende Material der Temperiersegmente 12.i bereits beim Umgreifen des Reifens 2 für eine bestimmte Temperierung. Bei einer aktiven Temperierung kann das Durchströmen mit dem temperierten Medium bzw. das elektrische Einstellen der Temperatur in den einzelnen Temperiersegmenten 12.i bzw. den zugehörigen Reifenzonen ebenfalls bereits beim Entladen stattfinden.

In einer alternativen Ausführungsform ist vorgesehen, dass der Reifen 2 nach dem Haupt-Vulkanisierungsprozess - wie üblich - über den Entlader 10 aus dem Vulkanisierungsraum 1 entladen wird, ohne dass bereits eine gezielte Temperierung stattfindet. Diese Entladung kann über den in Fig. 2 bzw. Fig. 3 dargestellten Entlader 10 mit dem Temperierelement 11 (mehrteilig) erfolgen oder aber über einen herkömmlichen Entlader 10, der den Reifen 2 im Bereich einer Öffnung 14 von innen greift und in den Bereich hinter der Heizpresse bzw. hinter dem Vulkanisierungsraum 1 (im Weiteren als "Abkühlbereich" 15 bezeichnet) überführt. Ein derartiger Entlader 10 ist in Fig. 1 beispielhaft dargestellt. In diesem Abkühlbereich 15 ist dann das Temperierelement 11 angeordnet. Im Gegensatz zu der Ausführung in Fig. 2 und Fig. 3 ist das Temperierelement 11 demnach nicht direkt an dem Entlader 10 angebracht, sondern im Abkühlbereich 15 entsprechend installiert.

Im Abkühlbereich 15 kann der Reifen 2 dann von dem Temperierelement 11 mit dem Temperiersegmenten 12.i umgriffen werden, indem die mehreren Teile des Temperierelementes 11 von außen gegen die Lauffläche 7 des Reifens 2 gelangen und damit in thermischer Verbindung stehen. Der Temperierprozess bzw. Nachvernetzungsprozess erfolgt dann im Abkühlbereich 15 in identischer Weise wie bereits zum Ausführungsbeispiel in Fig. 2 und Fig. 3 beschrieben.

Mit einem derartigen Temperierelement 11 gemäß den beschriebenen Ausführungsformen kann somit eine gezielte Temperierung des Reifens 2 in unterschiedlichen Reifenzonen erreicht werden. Diese Temperierung kann dabei auch derartig erfolgen, dass eine Nachvernetzung in unterschiedlichen Ebenen des Reifens 2 erfolgt, d.h. eine Vernetzung kann nicht nur in axial benachbarten Reifenzonen, sondern auch in radial benachbarten Reifenzonen gezielt unterschiedlich eingestellt werden. Dies kann beispielsweise dadurch erreicht werden, dass die Temperierzeit in den jeweiligen Temperiersegmenten 12.i kurz gewählt wird, sodass eine Nachvernetzung lediglich in den oberen Ebenen der Lauffläche 7 stattfindet, an die das jeweilige Temperiersegment 12.i direkt anliegt. Die darunter liegenden Ebenen, das heißt die dem Reifeninnenraum 4 näher gelegenen Ebenen der Lauffläche 7, werden durch den Temperierprozess weniger stark beeinflusst, so dass sich deren Vernetzungsgrad auch weniger stark verändert. Dadurch können Reifeneigenschaften, beispielsweise ein Rollwiderstand sowie ein Bremsverhalten gezielt angepasst werden. Dadurch kann im Gegensatz zu einem Haupt-Vulkanisierungsprozess vorteilhafterweise erreicht werden, dass eine Optimierung des Rollwiderstandes durch entsprechende Einstellung des Vernetzungsgrades in der jeweiligen Reifenzone nicht gleichzeitig auch das Bremsverhaltens ungewünscht beeinflusst und umgekehrt.

Durch die Möglichkeit der bereichsweise unterschiedlichen Temperierung der Lauffläche 7 wird weiterhin erreicht, dass in unterschiedlichen Reifenzonen, die unterschiedliche Gummimaterialien aufweisen, in etwa derselbe Vernetzungsgrad eingestellt werden kann. Bei einem herkömmlichen Vulkanisierungsprozess mit einer einheitlichen Vulkanisierungszeit wird eine Lauffläche 7, die in axial benachbarten Reifenzonen unterschiedliche Gummimischungen aufweist, zwangsläufig unterschiedliche Vernetzungsgrade aufweisen, da jede Gummimischung für dieselbe Zeit auf in etwa diese Temperatur T gebracht wird und daraus materialbedingt unterschiedlichen Vernetzungsgrade resultieren. Bei einer derartig geteilten Lauffläche 7 kann der Vernetzungsgrad durch entsprechende Wahl der Temperierungszeit bzw. Temperatur T bzw. des Temperaturverlaufes dT in den einzelnen Temperiersegmenten 12.i bzw. Reifenzonen des Reifens 2 erfindungsgemäß derartig eingestellt werden, dass der Vernetzungsgrad über die gesamte axiale Breite der Lauffläche 7 im Wesentlichen konstant ist. Dadurch kann ein symmetrisches Fahrverhalten erreicht werden, so dass die Reifeneigenschaften bzw. die Laufeigenschaften des fertiggestellten Reifens verbessert sind.

Alle beschriebenen Ausführungsformen sind lediglich für den Bereich der Lauffläche 7 beschrieben. Die beschriebenen Mechanismen und Temperierprozesse sind jedoch auch in analoger Weise auf dem Bereich der Seitenwand 8 bzw. der Reifenwulst 9 übertragbar, wenn das in den Figuren 1-3 dargestellte Temperierelement 11 auch in den Bereich der Seitenwand 8 bzw. der Reifenwulst 9 ragt.

### Bezugszeichenliste

- 1: Vulkanisierungsraum
- 2: Reifen
- 3: Zuleitung
- 4: Reifeninnenraum
- 5.1: Profilsegment
- 5.2: Seitenwandschalen
- 5.3: Wulstringe
- 6: Außenseite
- 7: Lauffläche des Reifens 2
- 8: Seitenwände des Reifens 2
- 9: Reifenwulst
- 10: Entlader
- 11: Temperierelement
- 12.i: Temperiersegmente
- 13: Durchflusskanäle
- 14: Öffnung
- 15: Abkühlbereich
- 100: Vulkanisierungsvorrichtung

- T: Temperatur
- dT: Temperaturverlauf

## Patentansprüche

1. Verfahren zum Vulkanisieren eines Reifens (2), mit mindestens den folgenden Schritten:
- Einbringen des Reifens (2) in einen Vulkanisierungsraum (1) und Durchführen eines Haupt-Vulkanisierungsprozesses durch Behandeln des Reifens (1) mit Druck und Wärme, wodurch der Reifen (2) in seine endgültige Form gebracht wird und eine Vernetzung des Materials des Reifens (2) stattfindet;
- Durchführen eines Temperierprozesses nach dem Abschluss des Haupt-Vulkanisierungsprozesses, wobei dazu über ein Temperierelement (11) thermisch auf den Reifen (2) eingewirkt wird, um den Reifen (2) nachzuvernetzen,
wobei
das Temperierelement (11) zumindest bereichsweise an den Reifen (1) angelegt wird und eine Temperatur (T) des Reifens (2) bereichsweise gezielt durch das Temperierelement (11) beeinflusst wird zum gezielten Nachvernetzen des Reifens (2) **dadurch gekennzeichnet, dass**
das Temperierelement (11) mit mehreren Temperiersegmenten (12.i) auf den Reifen (2) thermisch einwirkt und benachbarte Temperiersegmente (12.i) die Temperatur (T) des Reifens (2) unterschiedlich stark beeinflussen, wobei die mehreren Temperiersegmente (12.i) in axialer Richtung bezüglich des Reifens (2) aneinander angrenzen und unabhängig voneinander auf die Temperatur (T) des Reifens (2) einwirken können.

2. Verfahren nach Anspruch 1,
**dadurch gekennzeichnet, dass**
das Temperierelement (11) an eine Lauffläche (7) des Reifens (2) angelegt wird zum gezielten Nachvernetzen der Lauffläche (7).

3. Verfahren nach Anspruch 1 oder 2,
**dadurch gekennzeichnet, dass**
ein Zeitraum, den das Temperierelement (11) zumindest bereichsweise thermisch auf den Reifen (2) einwirkt, derartig gewählt wird, dass die Temperatur (T) des Reifens (2) schichtweise in radialer Richtung unterschiedlich stark beeinflusst wird.

4. Verfahren nach einem der vorhergehenden Ansprüche,
**dadurch gekennzeichnet, dass**
das Temperierelement (11) umlaufend an den Reifen (2) angelegt wird.

5. Verfahren nach einem der vorhergehenden Ansprüche,
**dadurch gekennzeichnet, dass**
mit dem Temperierelement (11) ein vorgegebener Temperaturverlauf (dT) in dem Reifen (2) eingestellt wird.

6. Verfahren nach einem der vorhergehenden Ansprüche,
**dadurch gekennzeichnet, dass**
das Temperierelement (11) aktiv beheizt oder abgekühlt oder in seiner Temperatur gehalten wird zum gezielten Beeinflussen der Temperatur (T) des Reifens (2).

7. Verfahren nach Anspruch 6,
**dadurch gekennzeichnet, dass**
das Temperierelement (11) elektrisch und/oder mit einem gasförmigen und/oder mit einem flüssigen Medium temperiert wird.

8. Verfahren nach einem der vorherigen Ansprüche,
**dadurch gekennzeichnet, dass**
das Temperierelement (11) passiv wirkt und beim Anlegen an den Reifen (2) ein Energieübertrag von dem Reifen (2) auf das Temperierelement (11) stattfindet zum gezielten Abkühlen des Reifens (2).

9. Verfahren nach einem der vorhergehenden Ansprüche,
**dadurch gekennzeichnet, dass**
der Temperierprozess mit dem Temperierelement (11) beim Entladen des Reifen (2) aus dem Vulkanisierungsraum (1) stattfindet, wobei das Temperierelement (11) dazu an einem Entlader (10) angeordnet ist, oder
der Temperierprozess mit dem Temperierelement (11) nach dem Entladen des Reifen (2) aus dem Vulkanisierungsraum (1) in einen Abkühlbereich (15) stattfindet, wobei das Temperierelmenent (11) dazu an dem Entlader (10) oder in dem Abkühlbereich (15) angeordnet ist.

## Claims

1. Method for vulcanizing a tyre (2), comprising at least the following steps:
- introducing the tyre (2) into a vulcanizing chamber (1) and carrying out a main vulcanizing process by treating the tyre (1) with pressure and heat, whereby the tyre (2) is brought into its final form and a curing of the material of the tyre (2) takes place,
- carrying out a temperature-controlling process after completion of the main vulcanizing process, wherein for this a temperature-controlling element (11) is used for acting thermally on the tyre (2) in order to post-cure the tyre (2), wherein
- the temperature-controlling element (11) is placed against the tyre (1), at least in certain regions, and the temperature (T) of the tyre (2) is specifically influenced in certain regions by the temperature-controlling element (11) for the specific post-curing of the tyre (2), **characterized in that**
the temperature-controlling element (11) acts thermally on the tyre (2) with multiple temperature-controlling segments (12.i) and adjacent temperature-controlling segments (12.i) influence the temperature (T) of the tyre (2) to differing degrees, wherein the multiple temperature-controlling segments (12.i) adjoin one another in the axial direction with respect to the tyre (2) and can act on the temperature (T) of the tyre (2) independently of one another.

2. Method according to Claim 1, **characterized in that** the temperature-controlling element (11) is placed against a tread (7) of the tyre (2) for selectively post-curing the tread (7).

3. Method according to Claim 1 or 2,
**characterized in that**
a time period for which the temperature-controlling element (11) acts thermally on the tyre (2), at least in certain regions, is chosen in such a way that the temperature (T) of the tyre (2) is influenced to differing degrees layer by layer in the radial direction.

4. Method according to one of the preceding claims, **characterized in that**
the temperature-controlling element (11) is placed circumferentially against the tyre (2).

5. Method according to one of the preceding claims, **characterized in that**
with the temperature-controlling element (11), a predetermined temperature profile (dT) is set in the tyre (2).

6. Method according to one of the preceding claims, **characterized in that**
the temperature-controlling element (11) is actively heated or cooled or its temperature is maintained for the specific influencing of the temperature (T) of the tyre (2).

7. Method according to Claim 6,
**characterized in that**
the temperature of the temperature-controlling element (11) is controlled electrically and/or by a gaseous medium and/or by a liquid medium.

8. Method according to one of the preceding claims, **characterized in that**
the temperature-controlling element (11) acts passively and, when it is placed against the tyre (2), an energy transfer from the tyre (2) to the temperature-controlling element (11) takes place for the specific cooling of the tyre (2).

9. Method according to one of the preceding claims, **characterized in that**
the temperature-controlling process with the temperature-controlling element (11) takes place when unloading the tyre (2) from the vulcanizing chamber (1), wherein for this purpose the temperature-controlling element (11) is arranged on an unloader (10), or
the temperature-controlling process with the temperature-controlling element (11) takes place after the unloading of the tyre (2) from the vulcanizing chamber (1) into a cooling region (15), wherein for this purpose the temperature-controlling element (11) is arranged at the unloader (10) or in the cooling region (15).

## Revendications

1. Procédé de vulcanisation d'un pneumatique (2), ledit procédé comprenant au moins les étapes suivantes :
- introduire le pneumatique (2) dans une chambre de vulcanisation (1) et réaliser un processus de vulcanisation principal par le biais d'un traitement thermique et sous pression du pneumatique (1), ce qui amène le pneumatique (2) dans sa forme finale et permet de réticuler la matière du pneumatique (2) ;
- réaliser un processus de régulation de température une fois le processus de vulcanisation principal terminé, un élément de régulation de température (11) agissant pour cela thermiquement sur le pneumatique (2) afin de soumettre le pneumatique (2) à une post-réticulation,
l'élément de régulation de température (11) étant appliqué sur le pneumatique (1) au moins dans certaines zones et l'élément de régulation de température (11) influant sélectivement sur la température (T) du pneumatique (2) dans certaines zones afin de soumettre le pneumatique (2) à une post-réticulation ciblée, **caractérisé en ce que**
l'élément de régulation de température (11) pourvu d'une pluralité de segments de régulation de température (12.i) agit thermiquement sur le pneumatique (2) et des segments de régulation de température (12.i) adjacents influent sur la température (T) du pneumatique (2) à des degrés différents, la pluralité de segments de régulation de température (12.i) étant adjacents les uns aux autres dans la direction axiale par rapport au pneumatique (2) et pouvant agir indépendamment les uns des autres sur la température (T) du pneumatique (2).

2. Procédé selon la revendication 1,
**caractérisé en ce que**
l'élément de régulation de température (11) est appliqué sur une bande de roulement (7) du pneumatique (2) afin de soumettre la bande de roulement (7) à une post-réticulation ciblée.

3. Procédé selon la revendication 1 ou 2,
**caractérisé en ce que**
un intervalle de temps pendant lequel l'élément de régulation de température (11) agit thermiquement sur le pneumatique (2) au moins dans certaines zones est choisi de manière à influer sur la température (T) du pneumatique (2) par couches à des degrés différents dans la direction radiale.

4. Procédé selon l'une des revendications précédentes,
**caractérisé en ce que**
l'élément de régulation de température (11) est appliqué circonférentiellement sur le pneumatique (2).

5. Procédé selon l'une des revendications précédentes,
**caractérisé en ce que**
un profil de température spécifié (dT) est réglé dans le pneumatique (2) avec l'élément de régulation de température (11).

6. Procédé selon l'une des revendications précédentes,
**caractérisé en ce que**
l'élément de régulation de température (11) est chauffé ou refroidi, ou sa température est maintenue, de manière active afin d'influer de manière ciblée sur la température (T) du pneumatique (2).

7. Procédé selon la revendication 6,
**caractérisé en ce que**
l'élément de régulation de température (11) est régulé en température électriquement et/ou avec un milieu gazeux et/ou un milieu liquide.

8. Procédé selon l'une des revendications précédentes,
**caractérisé en ce que**
l'élément de régulation de température (11) agit de manière passive et, lorsqu'il est appliqué sur le pneumatique (2), un transfert d'énergie se produit du pneumatique (2) à l'élément de régulation de température (11) afin de refroidir le pneumatique (2) de manière ciblée.

9. Procédé selon l'une des revendications précédentes,
**caractérisé en ce que**
le processus de régulation de température est effectué avec l'élément de régulation de température (11) lorsque le pneumatique (2) est déchargé de la chambre de vulcanisation (1), l'élément de régulation de température (11) étant pour cela disposé sur un moyen de déchargement (10), ou
le processus de régulation de température est effectué avec l'élément de régulation de température (11) après que le pneumatique (2) a été déchargé de la chambre de vulcanisation (1) jusque dans une zone de refroidissement (15), l'élément de régulation de température (11) étant pour cela disposé sur le moyen de déchargement (10) ou dans la zone de refroidissement (15).
